# EUROPÄISCHE PATENTSCHRIFT

(11) **EP 3 688 549 B1**
(45) Veröffentlichungstag und Bekanntmachung des Hinweises auf die Patenterteilung: **07.06.2023**
(21) Anmeldenummer: 18782350.5
(22) Anmeldetag: 25.09.2018
(51) Int. Cl.: G05G 5/03, G05G 1/04, G05G 9/047, G01L 5/22

(54) **SCHALTEINRICHTUNG**
SHIFTING DEVICE
ÉQUIPEMENT COMMUTATEUR

(30) Priorität: 27.09.2017 DE 202017105886 U
(43) Veröffentlichungstag der Anmeldung: 05.08.2020
(73) Patentinhaber: Spohn&Burkhardt GmbH&Co. KG, 89143 Blaubeuren (DE)
(72) Erfinder: HOLZINGER, Dietmar, 4175 Herzogsdorf (AT)
(74) Vertreter: Haverkamp Patentanwälte PartG mbB
(86) Internationale Anmeldenummer: PCT/EP2018/075886
(87) Internationale Veröffentlichungsnummer: WO 2019/063516

(56) Entgegenhaltungen:
- EP-A1- 3 343 311
- DE-A1- 19 926 576
- DE-A1-102007 019 470
- JP-A- 2014 048 878

## Beschreibung

Die Erfindung betrifft eine Schalteinrichtung zum Steuern von Fahrzeug-, Maschinen- oder Anlagenfunktionen mit einem um zumindest eine Achse schwenkbar verstellbaren Schalthebel.

Derartige Schalteinrichtungen - auch als Joystick angesprochen - werden zur Steuerung von Fahrzeug-, Maschinen- oder Anlagenfunktionen eingesetzt. Hierunter fallen auch Roboteransteuerungen. Ein weit verbreitetes Gebiet, in dem derartige Schalteinrichtungen eingesetzt werden, sind Baumaschinen, wie Radlader oder Bagger. Mittels einer solchen, aufgrund ihrer Verschwenkbarkeit nach Art eines Joysticks zu bedienenden Schalteinrichtung können unterschiedliche Maschinenfunktionen ausgeübt werden. So kann beispielsweise die Betätigung der Schalteinrichtung bei einem Bagger für die Funktion einer Vorwärts- und Rückwärtsfahrt dienen.

Die Schalthebel derartiger Schalteinrichtungen sind mit einem Griffstück ausgerüstet. Für eine Betätigung der Schalteinrichtung wird benutzerseitig das Griffstück mit einer Hand ergriffen. Ein solches Griffstück ist typischerweise ergonomisch an die auszuübende Bewegung angepasst und kann zusätzliche Schaltelemente, wie beispielsweise Taster, Wippen oder dergleichen tragen. Bei einer solchen Schalteinrichtung wird mit der Schwenkbewegung des Schalthebels eine erste Funktion und mit den im Griffstück angeordneten Schaltelementen damit zusammenhängende oder auch andere Funktionen der Maschine ausgeübt bzw. angesteuert. Der Schalthebel einer solchen Schalteinrichtung ist zumindest um eine Achse verschwenkbar geführt. Typischerweise ist ein solcher Schalthebel um zwei in einer Ebene rechtwinkelig zueinander angeordnete Achsen verschwenkbar, um eine Stellbewegung der Schalteinrichtung durch Verstellen des Schalthebels in unterschiedliche Richtungen zu ermöglichen. Dadurch kann mit einer solchen Schalteinrichtung ein größerer Funktionsumfang betätigt werden. Mitunter sind mit einer Schalteinrichtung mit einem zweiachsig aufgehängten Schalthebel Funktionen nicht nur in den beiden senkrecht zueinander verlaufenden Schwenkrichtungen, sondern auch in dazwischen befindlichen Richtungen möglich. Für die Führung des Schalthebels verfügt eine solche Schalteinrichtung über entsprechende Führungskulissen, damit der Schalthebel nur in den vorgesehenen Schwenkrichtungen verschwenkt werden kann.

Derartige Schalteinrichtungen sind mitunter betätigungskraftunterstützt ausgelegt. Mittels eines Stellaktors wird bei derartigen Schalteinrichtungen eine detektierte Schwenkbewegung des Schalthebels durch einen Benutzer entsprechend verstärkt. Entsprechend geringer muss die benutzerseitig auf den Schalthebel ausgeübte Kraft sein, um die gewünschte Schwenkbewegung ausführen zu können. Eine solche Schalteinrichtung ist aus EP 1 185 912 B1 bekannt.

Eine vom Prinzip her ähnlich aufgebaute Schalteinrichtung, wie in EP 1 185 912 B1 beschrieben, ist aus US 8,505,406 B2 bekannt. Diese vorbekannte Schalteinrichtung ist für einen Einsatz in Flugzeugen vorgesehen. Vor dem Hintergrund der beim Fliegen auftretenden Beschleunigungen, vor allem auch in unterschiedlichen Richtungen, ist diese vorbekannte Schalteinrichtung mit einer Massenkompensationseinrichtung ausgerüstet. Mit ein oder zwei Stellaktoren wird auf den Schalthebel eine der Beschleunigungskraft entgegengerichtete Kraft aufgebracht, um auf diese Weise auf die beweglichen Teile der Schalteinrichtung und damit vor allem auch auf den Schalthebel wirkende Beschleunigungskräfte zu kompensieren.

Aus GB 2 527 924 A ist ein Joystick als Schalteinrichtung zum Kontrollieren einer Maschine, insbesondere eines Flugzeuges offenbart. Dieser Stand der Technik löst das Problem, dass die Schalteinrichtung auch dann bedient werden kann, wenn diese beispielsweise durch Verklemmen durch einen Benutzer nicht mehr betätigt werden kann. Zu diesem Zweck verfügt diese vorbekannte Schalteinrichtung über eine Kraftmesseinrichtung, um die auf den Schalthebel ausgeübte Kraft zu erfassen. Zudem umfasst diese Schalteinrichtung einen Aktor, um diesen durch entsprechende Ansteuerung über eine Kontrolleinheit in eine bestimmte Position verstellen zu können, typischerweise in die Nullposition des Schalthebels. Ausgewertet wird bei einer Betätigung dieser Schalteinrichtung die auf den Schalthebel einwirkende Kraft und der damit bewirkte Stellhebelverstellbetrag. Unterschreitet der bewirkte Stellhebelverstellbetrag bei einer gewissen Kraft einen vordefinierten Stellwert, wird systemseitig auf eine Beeinträchtigung der Verstellbarkeit des Schalthebels geschlossen. Dann wird je nach Auslegung der Schalteinrichtung mittels des Aktuators der Schalthebel in eine systemseitig vorgegebene Position gebracht. Die Auslegung dieser vorbekannten Schalteinrichtung erfolgt vor dem Hintergrund, dass ein benutzerseitig nicht mehr betätigbarer Schalthebel zum Steuern eines Flugzeuges, wenn defekt, in seine Null-Schaltposition gebracht werden soll. Befindet sich der Schalthebel in seiner Nullposition, kann eine manuelle Betätigung blockiert werden. Somit dient bei diesem Stand der Technik zum Gewährleisten einer verbesserten Bediensicherheit.

Aus US 5,739,811 A ist eine weitere Schalteinrichtung bekannt, bei der die Bewegung des Schalthebels detektiert wird, um in Abhängigkeit von derselben einem Benutzer eine haptische Rückmeldung über den vorgenommenen Schaltvorgang zu geben.

Die vorbekannten Schalteinrichtungen sind bezüglich der damit zu realisierenden Schaltfunktionalität hinsichtlich ihrer Verschwenkbarkeit sowohl in Bezug auf den Schwenkbetrag als auch in Bezug auf die Schwenkrichtung an die für den jeweiligen Einsatzzweck vorgesehenen Funktionen angepasst. Bezüglich der mit einer solchen Schalteinrichtung ausübbaren Schwenkbewegung müssen für die unterschiedlichen Auslegungen einer solchen Schalteinrichtung Führungen und Schwenkbewegungsaufnehmer vorgesehen sein. Soll eine Schalteinrichtung um weitere Funktionalitäten in Bezug auf eine Verschwenkung des Schalthebels erweitert oder sollen Funktionalitäten gesperrt werden, muss die Schalteinrichtung entsprechend aufwendig umgerüstet oder durch einen die zusätzliche oder geringere Verschwenkfunktionalität des Schalthebels aufweisende Schaltkulisse ersetzt werden.

DE 199 26 576 A1 offenbart eine Bedieneinrichtung zur manuellen Eingabe von Steuersignalen an eine Steuereinheit. Derartige Bedieneinrichtungen werden in Kraftfahrzeugen im Rahmen integrierter Kontrollsysteme eingesetzt, wobei beispielsweise in einer solchen Bedieneinrichtung unterschiedliche Funktionen eines in mehrere Ebenen gegliederten Bedienmenüs bedient werden können. Der Schalthebel ist getrieblich über ein selbsthemmendes Getriebe an die Drehbewegung der Motorwelle eines Elektromotors als Stellaktor gekoppelt. Ferner verfügt diese vorbekannte Bedieneinrichtung über eine Einrichtung zum Erfassen des bedienerseitig auf das Stellglied ausgeübten Drehmomentes. In Abhängigkeit von dem auf den Schalthebel ausgeübten Moment folgt eine Ansteuerung des Elektromotors zum Nachführen des Schalthebels. Zum Erfassen des auf den Schalthebel ausgeübten Drehmomentes kann ein Drucksensor oder ein Dehnungsmessstreifen vorgesehen sein. Nähere Ausgestaltungen zur Anordnung eines Drucksensors oder eines Dehnungsmessstreifens sind diesem Stand der Technik nicht zu entnehmen. Eine Verwendung derartiger Kraftmesssensoren bedingt eine Herstellung der Schalteinrichtung in sehr engen Toleranzgrenzen. Überdies muss eine die Schalteinrichtung benutzende Person den Schalthebel mit besonderer Vorsicht betätigen, um Fehlansteuerungen zu vermeiden, die durch ein auf den Schalthebel ausgelöstes Drehmoment, wenn auch geringer Höhe, in die nicht gewünschte Richtung hervorgerufen werden können.

Vor diesem Hintergrund liegt der Erfindung die Aufgabe zugrunde, eine Schalteinrichtung der eingangs genannten Art dergestalt weiterzubilden, dass sich diese nicht für eine Vielzahl unterschiedlicher Auslegungen bezüglich der Schwenkbewegungsfunktionalität des Schalthebels der Schalteinrichtung einrichten lässt, sondern auch dessen Schaltsicherheit verbessert ist.

Gelöst wird diese Aufgabe erfindungsgemäß durch eine eingangs genannte, gattungsgemäße Schalteinrichtung mit den Merkmalen des Anspruchs 1.

Bei dieser Schalteinrichtung ist der Schalthebel über einen selbsthemmenden Antrieb an einen Stellaktor angeschlossen. Aufgrund des selbsthemmenden Antriebes ist eine Verstellung des Schalthebels bei dieser Schalteinrichtung nur durch den diesen antreibenden Stellaktor möglich. Als Stellaktor kann beispielsweise ein Elektromotor vorgesehen sein, dessen Antriebswelle unter Zwischenschaltung eines selbsthemmenden Getriebes den Schalthebel in die gewünschte Richtung verschwenkt. Als selbsthemmendes Getriebe kommt beispielsweise ein Getriebe mit einer entsprechend großen Untersetzung ebenso in Frage wie ein Getriebe unter Verwendung einer Schnecke. Die Schalteinrichtung verfügt über eine Kraftmesseinrichtung, mit der eine benutzerseitig auf den Schalthebel ausgeübte Betätigungskraft erfasst werden kann. Die Kraftmesseinrichtung ist mit ihrem Ausgangssignal an eine Steuereinheit angeschlossen. Diese wertet die empfangenen Signale der Kraftmesseinrichtung aus und steuert den Stellaktor und damit die Schwenkbewegung des Schalthebels.

In Abhängigkeit von der benutzerseitig auf den Schalthebel ausgeübten Kraft, die über die Kraftmesseinrichtung schalteinrichtungsseitig erfasst und ausgewertet wird, wird der Stellaktor entsprechend angesteuert, um den Schalthebel entsprechend der gewünschten Betätigungsrichtung nachzufahren. Dieses setzt voraus, dass die benutzerseitig gewünschte Betätigungsrichtung als Schwenkrichtung für den Schalthebel systemseitig erlaubt ist. Das durch den Stellaktor ausgelöste Nachfahren des Schalthebels, wobei dieses quasi spontan erfolgt, vermittelt dem Benutzer das Gefühl, den Schalthebel unmittelbar zum Ausüben der gewünschten Funktion verstellt zu haben, obwohl der Schalthebel tatsächlich nur durch den Stellaktor bewegt wird. Die Bewegung des Schalthebels durch den Stellaktor erlaubt, dass nicht nur die Schwenkbewegungsrichtung und/oder der mögliche Schwenkbewegungsbetrag, sondern auch die Schwenkbewegungshaptik durch eine entsprechende Ansteuerung des Stellaktors durch die Steuereinheit bereitgestellt werden kann. Vorzugsweise fließen in die Ansteuerung des Stellaktors zum Verstellen des Schalthebels auch funktionsabhängige Ansteuerungsdaten ein. Zu diesem Zweck ist der Steuereinheit ein Speicher zugeordnet oder bereits Teil der Steuereinheit, auf dem die für die gewünschte Schalthebelverstellung erforderlichen Funktionalitätsdaten, etwa in einer Funktionalitätsdatenbank abgelegt sind. Die Funktionalitätsdaten können beispielsweise auch eine sich über die Verstellbewegung ändernde Haptik betreffen, ebenso wie eine der jeweiligen Funktion zugeordnete Rückführung des Schalthebels in seine Null-Stellung. In Bezug auf Letzteres kann einer Rückführung in die Null-Stellung in Abhängigkeit von einem detektierten Rückführbewegung des Benutzers erfolgen. Auch kann ein selbsttätiger Rückführungswunsch des Schalthebels nach Verschwenken in seine Null-Stellung vorgesehen sein, etwa wenn der Benutzer das Griffstück loslässt. Eine solche Schalteinrichtung ist somit in Bezug auf die damit zu realisierende Funktionalität auch durch entsprechende Definition von Funktionalitätsdaten, die kraftabhängig durchaus auch unterschiedlich vorgesehen sein können, einrichtbar. Somit kann ein und dieselbe Schalteinrichtung durch Bereitstellen entsprechender Funktionalitätsdaten für die unterschiedlichsten auszuübenden Funktionalitäten eingerichtet werden. Dieses ist nicht nur günstig bei der Herstellung derartiger Schalteinrichtungen, sondern erlaubt auch durch entsprechendes Umprogrammieren der Stellaktoransteuerung durch Einbringen anderer Funktionalitätsdaten oder auch problemlos eine Umrüstung einer maschinenseitigen Schalteinrichtung oder eine Erweiterung des Funktionsumfanges.

Bei einer solchen Schalteinrichtung ist es auch möglich, eine Schalthebelbewegung benutzerabhängig einzurichten. So kann die Schaltschwelle, also: diejenige Betätigungskraft, die überschritten werden muss, damit eine Schalthebelbetätigung als solche erkannt wird, bei unterschiedlichen Benutzern unterschiedlich eingerichtet werden. Ebenso können in die Einrichtung Benutzervorlieben einfließen, etwa in Bezug auf eine Schalthebelrückführung - ausgelöst durch eine entsprechend erfasste Rückstellkraft mit selbsttätiger Rückführung oder mit benutzerseitig konstanter Rückstellkraftbeaufschlagung -. Ebenso ist es möglich, die Funktionalität der Schalteinrichtung in Bezug auf die Verschwenkmöglichkeiten des Schalthebels während einer aktiven Ansteuerung, beispielsweise einer Maschinen- oder Anlagenansteuerung an sich ändernde Umstände anzupassen. Hierdurch können dem Benutzer durch Ändern der Schalthebelhaptik und/oder des zugelassenen Schwenkbetrages sich ändernde Maschinen- oder Bearbeitungszustände kenntlich gemacht werden. Bei einer Verwendung einer solchen Schalteinrichtung etwa zum Steuern einer Presse kann auf Grund des Zugriffes auf entsprechende, der zu bedienenden Presse hinterlegten Funktionalitätsdaten mit zunehmenden Pressendruck die Schaltschwelle bzw. diejenige Kraft angehoben werden, die ein Benutzer aufbringen muss, um den Schalthebel weiter verschwenken zu können. Bei einer solchen Ansteuerung des Schalthebels wird dieser mit steigendem Pressendruck schwergängiger. Auf Grund dieser Rückkopplung kann eine mit einer solchen Schalteinrichtung betätigte Presse sehr viel feinfühliger durch einen Benutzer bedient werden.

Im Unterschied zu einer solchen Gegenkopplung kann die aktorseitig hervorgerufene Schwenkbewegung des Schalthebels auch nach Art einer Mitkopplung leichtgängiger werden. Wird beispielsweise eine solche Schalteinrichtung bei einem Rührwerk eingesetzt, kann eine Schalthebelbetätigung mit entweder abnehmender Viskosität einer Flüssigkeit oder beim Zudosieren von Flüssigkeit in ein trockenes Schüttgut das durch das Rührwerk weicher werdende Material durch eine leichter gängige Schwenkhebelbedienung haptisch an einen Benutzer zurückgemeldet werden.

Eine solche Schalteinrichtung eignet sich auch dazu, ferngesteuert zu werden. Dann erfolgt die Ansteuerung nicht in Folge der erfassten Stellkraft durch einen Benutzer. Vielmehr erhält die Steuereinheit ein entsprechendes Ansteuerungssignal von einer anderen Schalteinrichtung. Dieses erlaubt, dass mehrere Schalteinrichtungen dieser Art exakt parallel zueinander verstellt werden können. Derartige Anwendungen werden mitunter in Steuerständen benötigt, beispielsweise wenn mehrere Motoren gleich angesteuert werden sollen und zur Ansteuerung eines jeden Motors eine eigene Schalteinrichtung dieser Art vorgesehen ist. Diese gemäß dem vorstehenden Beispiel zusammengeschalteten Schalteinrichtungen können in einem anderen Betriebsmodus unabhängig voneinander betätigt werden.

Durchaus möglich ist auf Grund der freien Programmierbarkeit der Funktionalität einer solchen Schalteinrichtung auch, dass diese Schalteinrichtung zum Ansteuern unterschiedlicher Maschinen- oder Anlagenteile eingesetzt werden kann. In einem solchen Fall gehen in die Ansteuerung des Stellaktors für die unterschiedlichen Anlagen- oder Maschinenteile typischerweise unterschiedliche Funktionalitätsdaten ein.

Bei bestimmten Situationen, beispielsweise bei Notsituationen kann der Schalthebel auch entgegen der von einem Benutzer angelegten Stellkraft verstellt werden.

Eine solche Schalteinrichtung verfügt vorzugsweise über eine Weg- oder Winkelmesseinrichtung, um den Verstellbetrag der Schaltwelle zu erfassen. Hierbei kann es sich beispielsweise um optische oder elektronische Messeinrichtungen handeln. Möglich ist es auch, hierzu die Kommutierung eines als Stellaktor eingesetzten Elektromotors zu überwachen. Ist ein aus den Funktionsdaten vorgegebener Verstellbetrag erreicht, kann entweder die auf den Schalthebel wirkende Haptik geändert oder die Schalthebelbewegung beendet werden. Verknüpft ist dieses typischerweise mit einer an diesen Verstellpositionen vorgesehenen Funktionsausübung. In einer solchen Stellung oder auch in jeder Zwischenstellung erfolgt dann unabhängig von der realen Stellung des Schalthebels die maschinenseitige Ansteuerung der benutzerseitig gewünschten Funktionalität.

Die Möglichkeiten einer Einrichtung einer solchen Schalteinrichtung in Bezug auf den realisierbaren Schwenkbewegungsumfang können dadurch vergrößert werden, dass der Schalthebel um zwei, typischerweise in einer Ebene senkrecht zueinander angeordnete Schwenkachsen verstellbar ist. Der Schalthebel ist dann durch einen weiteren Stellaktor ebenso selbsthemmend um die zweite Schwenkachse verstellbar, wie dieses zu der ersten Schwenkachse beschrieben ist. Auch dieser zweite Stellaktor ist von der Steuereinheit angesteuert. Bei einer solchen Ausgestaltung ist der Schalthebel kardanisch aufgehängt und kann in jede beliebige Richtung durch entsprechende Ansteuerung der beiden Stellaktoren verschwenkt werden. Bei dieser Schalteinrichtung ist es durch das bereits vom Grundsatz her beschriebene Nachführkonzept möglich, dass eine Schwenkbewegung des Schalthebels nur in ganz bestimmte Richtungen zugelassen ist. Bei einer solchen Ausgestaltung ist die Kraftmesseinrichtung so ausgelegt, dass eine Richtungsauflösung der benutzerseitig aufgewendeten und auf das Griffstück des Schalthebels einwirkenden Kraft möglich ist. Wird schalteinrichtungsseitig eine Krafteinwirkung in einer nicht für die eingerichtete Funktionalität definierten Richtung festgestellt, wird der Schalthebel nicht nachgeführt bzw. verstellt. Bei einer festgestellten Kraftbeaufschlagung in einer durch die Funktionalitätsdaten zugelassenen Richtung wird der Schalthebel, durch entsprechende Ansteuerung der Stellaktoren verschwenkt. Somit werden bei einer solchen Schalteinrichtung zugleich die Bewegungsbahnen durch die Funktionalitätsdaten definiert und nicht notwendigerweise durch mechanische Führungen.

Neben den bereits vorstehend skizzierten Vorteilen ist bei einer solchen Schalteinrichtung auch von Vorteil, dass diese beispielsweise durch Vorauswahl über eine entsprechende Menüsteuerung in unterschiedlichen Menüebenen, also: Zum Ausführen unterschiedlicher Funktionalitäten, etwa einer Maschine einen unterschiedlichen Schwenkfunktionalitätsumfang aufweisen kann. Bei einer solchen Auslegung einer Maschinenansteuerung arbeitet die Steuereinheit sodann mit den einer Menüebene oder eines Menüpunktes jeweils zugeordneten Funktionalitätsdaten. Diese können sich durch unterschiedliche mögliche Schwenkbewegungsrichtungen ebenso unterscheiden wie in Bezug auf die Auslegung der Schwenkbewegungsbahnen oder die Schwenkbewegungshaptik.

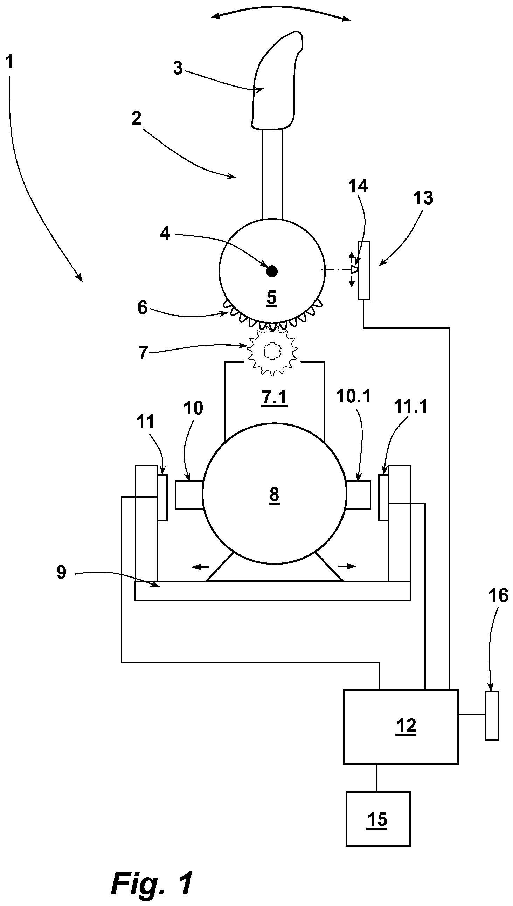

Nachfolgend ist die Erfindung anhand eines Ausführungsbeispiels unter Bezugnahme auf die beigefügte **Figur 1** beschrieben. Figur 1 zeigt eine schematisierte Darstellung einer Schalteinrichtung 1. Die Schalteinrichtung 1 umfasst einen Schalthebel 2 mit einem Griffstück 3 an seinem oberen Ende. Das Griffstück 3 dient zum Erfassen des Schalthebels 2 durch einen Benutzer. Der Schalthebel 2 ist um eine Schwenkachse 4 in den durch den Doppelpfeil in Figur 1 gekennzeichneten Richtungen einaxial verstellbar. An den Schalthebel 2 angeschlossen ist eine Zahnkalotte 5. Bei dem dargestellten Ausführungsbeispiel ist die Zahnkalotte 5 fest mit dem Schalthebel 2 verbunden. Durchaus möglich ist es auch, dass der Schalthebel 2 drehmomentschlüssig auf einer Schaltwelle sitzt, auf der ebenfalls die Zahnkalotte 5 drehmomentschlüssig sitzt, sodass auch bei dieser Anordnung eine feste kinematische Kopplung zwischen der Zahnkalotte 5 und dem Schalthebel 2 gegeben ist. Die Zahnkalotte 5 verfügt über eine Zahnung 6. Diese Zahnung 6 kämmt ein Antriebsritzel 7, das unter Zwischenschaltung eines durch eine große Untersetzung selbsthemmenden Getriebes 7.1 von einem Elektromotor 8 als Stellaktor angetrieben ist. Aufgrund des selbsthemmenden Getriebes 7.1 kann der Schalthebel 2 manuell nicht um die Schwenkachse 4 zum Ausüben einer Schaltbewegung verschwenkt werden. Eine Bewegung des Schalthebels 2 in Verschwenkrichtung ist allenfalls im Umfange eines Spiels zwischen der Zahnung 6 und dem Antriebsritzel 7 möglich. Verstellt werden kann der Schalthebel 2 nur durch den Elektromotor 8.

Der Elektromotor 8 ist bei dem dargestellten Ausführungsbeispiel schwimmend auf einer Motorplatte 9 montiert. Durch die schwimmende Lagerung des Elektromotors 8 auf der Motorplatte 9 in den in Figur 1 gezeigten Pfeilrichtungen bewegt werden. Der zugelassene Bewegungsbetrag ist gering und beträgt bei dem dargestellten Ausführungsbeispiel in jede Richtung nur etwa wenige Zehntel Millimeter. An das Gehäuse des Elektromotors 8 ist in die beiden Bewegungsrichtungen abragend jeweils ein Druckstempel 10, 10.1 angeordnet. Jeder Druckstempel 10, 10.1 wirkt bei einer entsprechenden Bewegung des Elektromotors 8 gegen einen Druckmesssensor 11 bzw. 11.1. Die Druckmesssensoren 11, 11.1 sind dementsprechend zu den Druckstempeln 10, 10.1 angeordnet und sind bei dem dargestellten, schematisierten Ausführungsbeispiel ebenfalls von der Motorplatte 9 getragen. Die vorbeschriebenen Komponenten bilden eine Kraftmesseinrichtung.

Aufgrund der schwimmenden Lagerung des Elektromotors 8 wird bei einer benutzerseitig ausgeübten Betätigungsbewegung des Schalthebels 2, bei der auf diesen eine Betätigungskraft in eine der beiden möglichen Verschwenkrichtungen aufgebracht wird, die gesamte Einheit mit dem Elektromotor 8 um die Schwenkachse 4 im Rahmen des durch den Abstand der Druckmesssensoren 11 bzw. 11.1 von dem jeweiligen Druckstempel 10 bzw. 10.1 bereitgestellten Spiels verstellt. Infolge dieser Bewegung wird auf den einen oder den anderen Druckmesssensor 11 oder 11.1 ein Anpressdruck durch den jeweiligen Druckstempel 10 oder 10.1 ausgeübt.

Die Druckmesssensoren 11, 11.1 sind an eine Steuereinheit 12 angeschlossen. Angeschlossen an die Steuereinheit 12 ist zudem der Elektromotor 8, der durch die Steuereinheit 12 angesteuert ist. Die von den Druckmesssensoren 11, 11.1 erfassten Druckmessdaten werden von der Steuereinheit 12 ausgewertet und in Abhängigkeit davon, von welchem Druckmesssensor 11 oder 11.1 ein Signal empfangen worden ist, wird der Elektromotor 8 und in Abhängigkeit von dem erfassten Drucksensorsignal und davon, von welchem Druckmesssensor 11 oder 11.1 dieses erfasst worden ist, in die eine oder andere Richtung angetrieben. Durch diese Ansteuerung wird durch die kinematische Kopplung der Schalthebel 2 dann in diejenige Richtung bewegt, in der benutzerseitig Betätigungsdruck ausgeübt worden ist. Insofern wird der Schalthebel 2 entsprechend der gewünschten Betätigungsrichtung der eigentlichen Betätigungskraft des Benutzers folgend nachgefahren. Bei der vorstehenden Betätigung durch einen Benutzer wurde vorausgesetzt, dass der Benutzer die von ihm ausgeübte Betätigungskraft auf den Schalthebel 2 bzw. das Griffstück 3 in derjenigen Richtung aufgebracht hat, in der eine Verstellung des Schalthebels 2 systemseitig zugelassen ist. Bei Ausüben einer Betätigungskraft, die quer zur Schwenkachse 4 gerichtet ist, wird kein Drucksignal erzeugt. Dementsprechend wird der Schalthebel auch nicht nachgefahren.

Zum Erfassen der Verschwenkbewegung des Schalthebels 2 verfügt die Schalteinrichtung 1 über einen Winkelsensor 13, der bei dem dargestellten Ausführungsbeispiel als Potentiometer ausgeführt ist. In Abhängigkeit von der Schwenkbewegung der Zahnkalotte 5 wird der Potentiometerabgriff 14, ausgehend von einer Nullstellung, in die eine oder andere Richtung bewegt. Auf diese Weise kann die Winkelstellung des Schalthebels erfasst werden. Das Potentiometer ist ebenfalls an die Steuereinheit 12 angeschlossen. Anstelle des in dem dargestellten Ausführungsbeispiel eingesetzten Potentiometers als Winkelsensor können auch Winkelsensoren anderer Bauart, beispielsweise optoelektronisch oder magnetisch arbeitend, eingesetzt werden.

In einer Funktionalitätsdatenbank 15 sind diejenigen Funktionalitäten hinterlegt, die bei der Ansteuerung des Elektromotors 8 bei Erfassen eines Drucksensorsignals zu berücksichtigen sind. In der Funktionalitätsdatenbank sind Daten bzw. Datensätze betreffend die für die eingerichtete Funktionalität definierten Verschwenkbewegungen hinterlegt. Definiert sein kann durch entsprechende Datensätze in der Funktionalitätsdatenbank beispielsweise der Verschwenkbetrag in eine bestimmte Richtung. Ist die definierte Endposition, erfassbar über das Potentiometer 13 als Winkelsensor erreicht, wird trotz benutzerseitig weiterer Betätigungskraftausübung auf den Schalthebel 2 dieser nicht nachgefahren. In Anhängigkeit von bestimmten Schwenkstellungen kann beispielsweise ein weiteres Verschwenken in dieselbe Richtung blockiert sein. Ebenso ist es möglich, an bestimmten Verschwenkpositionen den Benutzer durch entsprechende Ansteuerung des Elektromotors 8 eine haptische Rückmeldung zum Signalisieren bestimmter Schaltstellungen zu geben, die einem Benutzer das Gefühl einer Rastung vermittelt. Zudem sind in der Funktionalitätsdatenbank 15 schwenkpositionsabhängige Ansteuerungsfunktionen hinterlegt, gemäß denen bei Erreichen dieser vorgegebenen Verschwenkpositionen des Schalthebels 2 die für diese Schwenkhebelposition vorgesehene Maschinenansteuerung vorgenommen wird. In den Funktionalitätsdaten können ebenfalls benutzerbezogene Funktionalitätsdaten hinterlegt sein.

Abgelegt in der Funktionalitätsdatenbank ist auch eine einer Verschwenkbewegung zugeordnete Schaltdruckschwelle. Erst wenn ein in die gewünschte Richtung erfasstes Drucksensorsignal in einer bestimmten Höhe erfasst worden ist, wird durch entsprechende Ansteuerung der Steuereinheit 12 der Schalthebel 2 nachgefahren. Hierdurch können unbeabsichtigte Fehlbedienungen vermieden werden. Es versteht sich, dass auch die Schaltschwellen in Abhängigkeit von dem jeweiligen Benutzer, der anzusteuernden Funktionalität oder anderen Kriterien hinsichtlich ihres Schwellwertes in unterschiedlicher Höhe vorgegeben werden können.

Von Besonderheit bei dem vorbeschriebenen Ausführungsbeispiel ist, dass sowohl die Verschwenkung hinsichtlich des Verschwenkbetrages frei und ohne mechanische Führungen allein durch entsprechende, in der Funktionalitätsdatenbank 15 hinterlegte Funktionalitätsdaten bereitgestellt ist. Die beiden möglichen Schwenkrichtungen des Schalthebels 2 und die Schwenkachse 4 können somit beliebig den jeweiligen Anforderungen entsprechend programmiert werden. Zu diesem Zweck ist an die Steuereinheit 12 eine Schnittstelle 16 angeschlossen, aus der die in der Funktionalitätsdatenbank 15 enthaltenen Funktionalitätsdaten ausgelesen und neue in diese eingestellt werden können.

Die Erfindung ist vorstehend anhand der Schalteinrichtung 1 beschrieben, deren Schalthebel 2 um eine einzige Schwenkachse, die Schwenkachse 4, verschwenkbar ist. In einer anderen Ausgestaltung einer in den Figuren nicht dargestellten Schalteinrichtung ist vorgesehen, dass der Schalthebel um zwei, in einer Ebene rechtwinkelig zueinander angeordnete Schwenkachsen verstellbar ist. Bei dieser Ausgestaltung ist der Schalthebel in analoger Weise auch um die zweite Schwenkachse durch einen Stellaktor unter Zwischenschaltung eines selbsthemmenden Antriebes verschwenkbar. In gleicher Weise ist zum Zwecke einer Verstellung dieser Schalteinrichtung eine der zweiten Schwenkachse zugehörige Kraftmesseinrichtung nebst Winkelsensor zugeordnet.

Der Schalthebel einer solchen Schalteinrichtung kann aufgrund seiner typischerweise kardanischen Aufhängung grundsätzlich in jede beliebige Winkelrichtung verstellt werden, wenn die beiden Stellaktoren durch die Steuereinheit entsprechend angesteuert werden. Bei einer solchermaßen konzipierten Schalteinrichtung ist die Ansteuerprogrammierung so ausgelegt, dass der Schalthebel nur in bestimmte vordefinierte Schwenkrichtungen verschwenkt werden kann. Eine Betätigungskrafterfassung erfolgt, wenn die Betätigungskraft nicht in Richtung exakt einer der beiden Schwenkachsen erfolgt, somit über beide Kraftmesseinrichtungen anteilig. Aus der dann erfassten Kraftaufteilung auf die beiden Kraftmesseinrichtungen kann die Richtung des benutzerseitigen Schwenkrichtungswunsches ermittelt werden. Nachgefahren wird der Schalthebel allerdings nur dann, wenn der Benutzer den Schwenkhebel in eine systemseitig zugelassene Schwenkrichtung bewegen möchte. Somit wird durch die Ansteuerung bei einer solchen Schalteinrichtung nicht nur der mögliche bzw. zugelassene Verschwenkbetrag definiert, sondern auch die Verschwenkrichtung, und zwar ohne, dass hierzu mechanische Führungen für den Schalthebel benötigt werden würden.

Die Möglichkeit der Programmierung einer solchen Schalteinrichtung sind vielfältig. Selbstverständlich können neben den in der Funktionalitätsdatenbank auf die Ansteuerung Einfluss nehmenden Funktionalitätsdaten auch andere Daten der Steuereinheit zugeführt sein, die auf eine Ansteuerung Einfluss nehmen oder bei der Ansteuerung berücksichtigt werden. Möglich ist etwa eine Auslegung einer solchen Schalteinrichtung dergestalt, dass bei unterschiedlichen Maschinenbedienungsmenüebenen eine Schalthebelverstellansteuerung und damit die Definition, in welchen Richtungen und wie weit der Schalthebel benutzerseitig verstellt werden kann, unterschiedlich ist.

Die Erfindung ist anhand von Ausführungsbeispielen erläutert, ohne den Umfang der geltenden Ansprüche zu verlassen, ergeben sich für einen Fachmann zahlreiche weitere Ausgestaltungen, die Erfindung umzusetzen, ohne dass dieses im Rahmen dieser Ausführungen näher erläutert werden müsste.

### Bezugszeichenliste

- 1: Schalteinrichtung
- 2: Schalthebel
- 3: Griffstück
- 4: Schwenkachse
- 5: Zahnkalotte
- 6: Zahnung
- 7: Antriebsritzel
- 7.1: Getriebe
- 8: Elektromotor
- 9: Motor
- 10, 10.1: Druckstempel
- 11, 11.1: Druckmesssensor
- 12: Steuereinheit
- 13: Winkelsensor
- 14: Potentiometerabgriff
- 15: Funktionalitätsdatenbank
- 16: Schnittstelle

## Patentansprüche

1. Schalteinrichtung zum Steuern von Fahrzeug-, Maschinen- oder Anlagenfunktionen mit einem um zumindest eine Achse (4) schwenkbar verstellbaren Schalthebel (2), wobei die Schalteinrichtung (1) über einen Stellaktor (8) verfügt, der über einen selbsthemmenden Antrieb kinematisch an den Schalthebel (2) zum Verschwenken desselben angeschlossen ist und somit eine Verstellung des Schalthebels (1) nur mittels des Stellaktors (8) möglich ist, und dass die Schalteinrichtung (1) eine Kraftmesseinrichtung (10, 11; 10.1, 11.1) zum Erfassen der benutzerseitig auf dem Schalthebel (2) ausgeübten Betätigungskraft und eine mit dem Signal der Kraftmesseinrichtung (10, 11; 10.1, 11.1) beaufschlagte Steuereinheit (12) zum Auswerten der Kraftmessdaten und zum Ansteuern des Stellaktors (8) umfasst, **dadurch gekennzeichnet, dass** der Stellaktor (8) schwimmend gegenüber der Kraftmesssensoreinrichtung (10, 11; 10.1, 11.1) gelagert ist.

2. Schalteinrichtung nach Anspruch 1, **dadurch gekennzeichnet, dass** an die Schalteinrichtung (1) eine Einrichtung zum Erfassen der durch den Stellaktor (8) bewirkten Schalthebelbewegung und/oder zum Erfassen des durch den Stellaktor (8) bewirkten Schalthebelbewegungsbetrages angeschlossen ist.

3. Schalteinrichtung nach Anspruch 2, **dadurch gekennzeichnet, dass** die Schalteinrichtung (1) zum Erfassen einer Schalthebelbewegung über einen Weg- oder Winkelsensor (13) verfügt.

4. Schalteinrichtung nach einem der Ansprüche 1 bis 3, **dadurch gekennzeichnet, dass** die Kraftmesseinrichtung zumindest einen Kraftmesssensor (11, 11.1) aufweist, der ausgelegt ist, Druck- und/ oder Zugkräfte zu erfassen.

5. Schalteinrichtung nach einem der Ansprüche 1 bis 3, **dadurch gekennzeichnet, dass** die Kraftmesssensoreinrichtung zwei Kraftmesssensoren (11, 11.1) aufweist.

6. Schalteinrichtung nach einem der Ansprüche 1 bis 5, **dadurch gekennzeichnet, dass** als Stellaktor ein Elektromotor (8) vorgesehen ist, dessen Antriebswelle unter Zwischenschaltung eines selbsthemmenden Getriebes (7.1) Schalthebel (2) antreibt.

7. Schalteinrichtung nach Anspruch 6, **dadurch gekennzeichnet, dass** der Elektromotor (8) durch die Steuereinheit (12) in beide Drehrichtungen ansteuerbar ist.

8. Schalteinrichtung nach einem der Ansprüche 1 bis 7, **dadurch gekennzeichnet, dass** der Schalthebel um zwei winkelig zueinander verlaufende Schwenkachsen verstellbar ist und dass der Schalthebel einen weiteren Stellaktor aufweist, durch den der Schalthebel um die weitere Schwenkachse mit einem selbsthemmenden Antrieb verschwenkbar ist und, dass die Schalteinrichtung auch bezüglich der zweiten Schwenkachse eine Kraftmesseinrichtung aufweist.

9. Schalteinrichtung nach Anspruch 8, **dadurch gekennzeichnet, dass** die beiden Schwenkachsen in einer gemeinsamen Ebene rechtwinkelig zueinander angeordnet sind.

10. Schalteinrichtung nach einem der Ansprüche 1 bis 9, **dadurch gekennzeichnet, dass** der Schalthebel oder ein sein Griffelement tragender Schalthebelabschnitt translatorisch verstellbar ist, wobei die Bewegungsrichtung der translatorischen Bewegung senkrecht zur Ebene des oder der Schwenkachsen vorgesehen ist.

## Claims

1. Shifting device for controlling vehicle, machine, or system functions, comprising a shifting lever (2), which can be adjusted in a pivoting manner about at least one axis (4), wherein the shifting device (1) has an actuator (8), which is kinematically connected to the shifting lever (2) via a self-locking drive in order to pivot it, and therefore an adjustment of the shifting lever (2) is only possible by means of the actuator (8), and the shifting device (1) further comprises a force measurement device (10, 11; 10.1, 11.1) for detecting the actuating force exerted on the shifting lever (2) by the user, and a control unit (12) to which the signal of the force measurement device (10, 11; 10.1, 11.1) is applied in order to evaluate the force measurement data and for controlling the actuator (8), **characterised in that** the actuator (8) is mounted on bearings in a floating manner in relation to the force measurement device (10, 11; 10.1, 11.1).

2. Shifting device according to claim 1, **characterised in that** a device is connected to the shifting device (1) for detecting the shifting lever movement initiated by the actuator (8) and/or detecting the amount of shifting lever movement initiated by the actuator (8).

3. Shifting device according to claim 2, **characterised in that** the shifting device (1) is provided with a path sensor or angle sensor (13) for detecting a shifting lever movement.

4. Shifting device according to any one of claims 1 to 3, **characterised in that** the force measurement device comprises at least one force measurement sensor (11, 11.1), which is configured for detecting pushing and/or pulling forces.

5. Shifting device according to any one of claims 1 to 3, **characterised in that** the force measurement device comprises two force measurement sensors (11, 11.1).

6. Shifting device according to any one of claims 1 to 5, **characterised in that** an electric motor (8) is provided as the actuator, of which the drive shaft drives the shifting lever (2) with the intermediate engagement of a self-locking gear (7.1).

7. Shifting device according to claim 6, **characterised in that** the electric motor (8) can be controlled by the control unit (12) in both directions of rotation.

8. Shifting device according to any one of claims 1 to 7, **characterised in that** the shifting lever can be adjusted about two pivot axes, running at an angle to one another, and that the shifting lever comprises a further actuator, by means of which the shifting lever can be pivoted about the further pivot axis with a self-locking drive, and that the shifting device also comprises a force measurement device in relation to the second pivot axis.

9. Shifting device according to claim 8, **characterised in that** the two pivot axes are arranged in a common plane at right angles to one another.

10. Shifting device according to any one of claims 1 to 9, **characterised in that** the shifting lever, or a shifting lever section carrying its grip element, can be adjusted in a translational manner, wherein the direction of movement of the translational movement is provided perpendicular to the plane of the pivot axis/axes.

## Revendications

1. Équipement commutateur pour commander des fonctions de véhicules, de machines ou d'installations, comportant un levier commutateur (2) réglable par pivotement autour d'au moins un axe (4), l'équipement commutateur (1) disposant d'un actionneur de positionnement (8), lequel est raccordé cinématiquement, par le biais d'un entraînement à blocage automatique, au levier commutateur (2) afin de faire pivoter ce dernier et permettant de ce fait un changement de la position du levier commutateur (2) uniquement par l'actionneur de positionnement (8), et l'équipement commutateur (1) comportant un équipement dynamométrique (10, 11 ; 10.1, 11.1) afin de détecter la force d'actionnement exercée du côté utilisateur sur le levier commutateur (2) et une unité de commande (12) réceptionnant le signal de l'équipement dynamométrique (10, 11 ; 10.1, 11.1) afin d'exploiter les données dynamométriques et de piloter l'actionneur de positionnement (8), **caractérisé en ce que** l'actionneur de positionnement (8) est logé de manière flottante par rapport à l'équipement de détection dynamométrique (10, 11 ; 10.1, 11.1).

2. Équipement commutateur selon la revendication 1, **caractérisé en ce qu'à** l'équipement commutateur (1) est raccordé un équipement destiné à détecter les mouvements du levier commutateur déclenchés par l'actionneur de positionnement (8) et/ou pour détecter l'ampleur des mouvements du levier commutateur déclenchés par l'actionneur de positionnement (8).

3. Équipement commutateur selon la revendication 2, **caractérisé en ce que** l'équipement commutateur (1) dispose, pour détecter un mouvement du levier commutateur d'un capteur de course ou d'un détecteur goniométrique (13).

4. Équipement commutateur selon l'une des revendications 1 à 3, **caractérisé en ce que** l'équipement dynamométrique présente au moins un détecteur dynamométrique (11, 11.1), lequel est conformé pour détecter les forces de poussée et/ou de traction.

5. Équipement commutateur selon l'une des revendications 1 à 3, **caractérisé en ce que** l'équipement à détecteur dynamométrique présente deux détecteurs dynamométriques (11, 11.1).

6. Équipement commutateur selon l'une des revendications 1 à 5, **caractérisé en ce qu'**un électromoteur (8) est prévu en tant qu'actionneur de positionnement, dont l'arbre d'entraînement entraîne le levier commutateur (2) par l'intermédiaire d'un engrenage (7.1) à blocage automatique.

7. Équipement commutateur selon la revendication 6, **caractérisé en ce que** l'électromoteur (8) peut être actionné par l'unité de commande (12) dans les deux sens de rotation.

8. Équipement commutateur selon l'une des revendications 1 à 7, **caractérisé en ce que** le levier commutateur peut être positionné autour de deux axes de pivotement s'étendant perpendiculairement l'un par rapport à l'autre et **en ce que** le levier commutateur présente un actionneur de positionnement supplémentaire, par lequel le levier commutateur peut être pivoté au moyen d'un entraînement à blocage automatique autour d'un axe de pivotement supplémentaire et **en ce que** l'équipement commutateur présente, également par rapport au second axe de pivotement, un équipement dynamométrique.

9. Équipement commutateur selon la revendication 8, **caractérisé en ce que** les deux axes de pivotement sont disposés sur un plan commun de manière orthogonale l'un par rapport à l'autre.

10. Équipement commutateur selon l'une des revendications 1 à 9, **caractérisé en ce que** le levier commutateur ou son tronçon de levier commutateur supportant son élément de préhension peut être positionné en translation, le sens de déplacement de ce mouvement en translation étant prévu perpendiculairement au plan de l'axe de pivotement ou des axes de pivotement.
